# EUROPEAN PATENT SPECIFICATION

(11) **EP 2 274 897 B1**
(45) Date of publication and mention of the grant of the patent: **11.01.2012**
(21) Application number: 07846822.0
(22) Date of filing: 26.11.2007
(51) Int. Cl.: H04L 29/12

(54) **TECHNIQUE FOR ADDRESS RESOLUTION IN A DATA TRANSMISSION NETWORK**
TECHNIK ZUR ADRESSENAUFLÖSUNG IN EINEM DATENÜBERTRAGUNGSNETZWERK
TECHNIQUE POUR UNE RÉSOLUTION D'ADRESSE DANS UN RÉSEAU DE TRANSMISSION DE DONNÉES

(43) Date of publication of application: 19.01.2011
(73) Proprietor: Telefonaktiebolaget LM Ericsson (publ), 164 83 Stockholm (SE)
(72) Inventor: PAPP, Oktavian, 2086 Tinnye (HU); CSASZAR, Andras, 1125 Budapest (HU); MIHALY, Attila, 2120 Dunakeszi (HU); WESTBERG, Lars, 745 96 Enköping (SE)
(74) Representative: Mohsler, Gabriele
(86) International application number: PCT/EP2007/010256
(87) International publication number: WO 2009/068045

(56) References cited:
- US-A- 6 115 385
- US-A1- 2001 039 591
- SIDOROVS A ET AL: "SmartARP: merging IP and MAC addressing for low-cost gigabit Ethernet networks" COMPUTER NETWORKS, ELSEVIER SCIENCE PUBLISHERS B.V., AMSTERDAM, NL, vol. 31, no. 21, 10 November 1999 (1999-11-10), pages 2193-2204, XP004304642 ISSN: 1389-1286

## Description

### Technical Field

The invention relates to a technique for addressing destination nodes in data transmission networks. In particular, the invention relates to a technique for address resolution in a data transmission network, for example ARP-based address resolution in IPv4 networks.

### Background

In data transmission networks such as, for example, fixed and mobile telecommunication networks, data transmission functionalities are usually organized in a layered fashion. Often the function layers are organized at least in part according to the so-called ISO/OSI reference architecture for the design of communication protocols. Within this architecture, the Layer 2 or Link Layer comprises functions responsible for transferring data between physical nodes in the network. The Layer 3 or Network Layer is responsible for transferring data packets end-to-end, i.e. typically across multiple nodes or hops. As an example, a network may deploy an IEEE 802.x mechanism (e.g., Ethernet) for the Layer 2 functionality and IP (Internet Protocol) for the Layer 3 functionality.

When a host wants to send an IP packet to a next hop, the IP packet has to be framed into a Layer 2 packet. The Layer 2 header has to contain a Layer 2 MAC (Media Access Control) address, i.e. a specific physical address (device address, hardware address) of a network adapter of the next hop. Therefore, the sending host needs to determine the physical address which is associated with the network address of the destination node. This determination is called "address resolution". To this end, a host may access a list of associations of individual network addresses with individual physical addresses for a plurality of destinations. For example, in an IPv4 environment, in which ARP (Address Resolution Protocol) is employed, the host has access to an "ARP cache" which contains mappings of IP addresses to MAC addresses.

In case the host wants to send a packet to a next IP hop, and it does not find the IP address in the ARP cache, it broadcasts an "ARP Request" within the local physical network, e.g. a LAN (Local Area Network). The ARP request contains the IP address for which the host requires the MAC address. A node in the local network, which recognizes the network address as its own, sends an "ARP Reply" ("ARP response") to the sender including its physical address (i.e. MAC address in an Ethernet LAN). The host stores the association of the IP address with the received physical address in its ARP cache and applies the association to the packet to be sent, i.e. inserts the physical address into the MAC frame header. While address resolution has been outlined here for an IPv4 / ARP environment, similar principles may hold in other environments such as, e.g., in an IPv6 / ND (Neighbor Discovery) environment.

For a flexible network configuration, further interoperability between Link Layer and Network Layer may be provided besides the address resolution mechanism. A widely employed technique in this respect is the "proxy ARP" functionality. A node, for example a router, is configured to answer ARP Requests intended for another node by supplying its own physical address. By pretending to be another node, the router accepts the responsibility for forwarding packets to the other node. Proxy ARP allows to use a single network address for two or more physical networks which are separated by the proxy ARP router. In other words, with the proxy ARP mechanism a host on a particular physical network can reach a host on a remote physical network without the need to configure a routing via, e.g., the default gateway. For example, the remote physical network may have been added later, or a single physical network may be subdivided in order to enlarge the network, for security reasons, etc. With proxy ARP, a physical network can be simply extended without a requirement to change routing tables, e.g. in an upstream router.

The proxy ARP functionality in a router works as follows: In case the router receives a broadcasted ARP Request, the network address indicated therein is compared to the network addresses and address ranges in a routing table of the router. In case the indicated network address is associated with the network interface, over which the ARP request has been received, the router does nothing. In case the indicated network address is associated with a different network interface, the router will answer the ARP Request by providing its own physical address and, more precisely, the physical address of the network interface related to the physical network from which the ARP Request has been received.

When using an address resolution mechanism such as the ARP technique, it is a general problem to limit the size of an ARP cache or suchlike mapping table associated with the host. Therefore, typically a time-out mechanism is implemented, according to which, address bindings expire after a predetermined time limit, e.g. 20 minutes. After expiry, the respective binding is deleted from the cache. A new ARP Request has to be sent in case a packet is to be sent to the deleted address binding. The binding received with the ARP response is then re-inserted into the cache. This mechanism is complicated and inefficient, in particular in large physical networks.

While the proxy ARP functionality allows a flexible (re-)configuration of a network segment, the ARP cache of a host in that segment contains potentially a large number of entries with different IP addresses bound to the same physical address of the proxy ARP router.

Furthermore, the router providing the proxy ARP mechanism may have to process and answer a large number of ARP Requests for hosts assuming that a destination host is connected to the same local physical network, although the destination is located in a remote physical network behind the router. Besides an increased processing load in the router, this also leads to an increased network traffic in the physical networks due to the increased number of broadcasted ARP Requests.

The above aspects are drawbacks when considering a deployment of the otherwise flexible proxy ARP technique.

Document US 2001/0039591 A1 concerns a process and an apparatus for speeding-up layer-2 and layer-3 routing and for determining layer-2 reachability through a plurality of subnetworks. In one embodiment, the plurality of subnetworks are logically devided layer-2 ATM subnetworks. A first host located in a layer-2 ATM subnet-work can directly send via a shortcut path L2 data packets to a second host located in another layer-2 ATM subnetwork without involving L3 routing.

### Summary

There is a demand for a technique for address resolution in a data transmission net work, which keeps the advantages of address resolution techniques such as the above-described ARP mechanism including the proxy ARP functionality, and at the same time avoids one or more of its disadvantages.

This demand is satisfied by a first method for address resolution in a data transmission network, wherein the method comprises the following steps performed in a host of the data transmission network: maintaining an association of at least one physical address with at least one network address range comprising multiple network addresses; obtaining a target network address; comparing the target network address with the network address range to determine an associated target physical address; and providing the determined target physical address, for example for initiating a data transmission by the host.

The data transmission network may comprise multiple hosts configured according to a network topology such as a bus topology or ring topology. For example, the data transmission network may comprise an Internet/IP network, but may also be based on other technologies such as Token Ring or ATM. From the point of view of higher network layers, the hosts may be in a client-server relation, peer-to-peer relation or any other communication relation to each other in a stationary or dynamical fashion. The data transmission network may for example comprise a mobile network such as an UMTS network comprising as hosts mobile terminal devices, routing nodes in the radio access and core network of the UMTS network such as Node B, RNC, SGSN, GGSN etc., and application services provided, e.g., in an IMS domain of the network by a plurality of application servers.

A host in the network may be any computing device from stationary or mobile terminal devices, network devices such as routing devices, e.g., routers, gateways or firewalls, server devices for providing network services, such as authentication or authorization servers, or application services. From a functional point of view, a host may be any functional entity in the network or connected to the network with which a specific dynamic or stationary network address (e.g., Layer 3 address or IP address) is associated. The host comprises at the same time a physical address (device address) for addressing in the link layer, e.g. a Layer 2 address or MAC address.

The transmission data may comprise any data to be transmitted from a host in the network to another host, node or device. For example, the data may relate to a higher network layer such as a presentation or application layer. Application data may comprise, for example, speech, video and/or any kind of multimedia data. The transmission data may additionally or alternatively comprise control data or signalling data or data of lower network layers.

The network address range may indicate a sub-network of the data transmission network, for example according to a CIDR (Classless Inter-Domain Routing) notation, i.e. net mask or Prefix notation. In this case, therefore, the multiple network addresses form a continuum of addresses, i.e. an address sequence. Alternatively, the network address range may indicate a set of multiple discrete network addresses which are not arranged in a sequence. The network address range may also comprise any combination of these variants.

One class of realizations of the first method comprises the initial step of determining the network address range associated with the physical address in the host. Another class of realizations comprises the determination of the network address range external to the host, for example in an address resolution support node (such as a router) in the data transmission network. Features of the latter class of realizations of the method will be summarized further below. Both classes may also be combined.

Referring to the determination of the network address range in the host, the host may maintain a list of associations of individual network addresses with individual physical addresses. For example, in an IPv4 network the host may maintain an ARP cache comprising associations of individual IP addresses with individual Layer 2 addresses (e.g., MAC addresses). Additionally, the list may also contain one or more network address ranges associated with individual physical addresses. The step of determining the network address range may then comprise detecting associations of different network addresses and/or network address ranges with one and the same physical address. For example, two or more network addresses may be associated with a particular physical address. As another example, one or more individual network addresses and one or more network address ranges may be associated with a particular physical address.

One mode of this class of realizations comprises to set, in the step of determining the network address range, the network address range to a range of at least a predetermined minimum sub-network size. In other words, the network address range may comprise a predetermined maximum net mask, for example comprising a maximum of 28 bits (or e.g. 26 bits, 24 bits, etc.) in an IPv4 network. The minimum sub-network size may be provided to the host as control data from the routing node, e.g. in an ARP response, or may be manually or in any other way configured by an operator of the data transmission network. The predetermined minimum sub-network size may represent a smallest sub-network size used for routing in a routing node that can be contacted by the host. This size may coincide with a size of the network segment subdivided by the router, wherein the transmitting host is in one portion and the receiving node or host is located in another portion of the subdivided segment.

With regard to the abovementioned class of realizations, in which the determination of the network address range is performed external to the host, the first method may comprise the further step of receiving an indication of the network address range associated with the physical address at the host. The indication may, for example, be received from an address resolution support node, e.g., a routing node, in the data transmission network. The indication may be received embedded into, e.g., an ARP response in an IPv4 network. In different implementations, the address resolution support node may execute a broadcasting function for broadcasting a network address range in the host's network without prior trigger by an address resolution request, for example on a periodical basis. In still another implementation, the indication may be received from an operator's terminal connected to the host's network.

In some implementations of the first method, the further step of determining, in case the target network address matches to multiple network address ranges, the smallest matching network address range in order to determine the target physical address. This may be a variant of a 'longest prefix match' algorithm.

The first method may comprise the further step of sending, in case the target network address does not match to any network address range or individual network address, an address resolution request comprising the target network address. One implementation of this mode of the first method may comprise broadcasting, in an IPv4 network, an ARP Request in order to receive an ARP response from, e.g., an address resolution support node in the network. Any node in a physical network which supports address resolution, for example by providing a proxy ARP functionality, may be called an 'address resolution support node'. For example, a router connected to a physical network and acting as a default gateway may operate as an address resolution support node.

The abovementioned demand is further satisfied by a second method for address resolution in a data transmission network, wherein the method comprises the following steps in an address resolution support node of the data transmission network: receiving an address resolution request comprising a target network address; determining, based on the target network address, a network address range; and responding with an indication of a physical address of the address resolution support node and an indication of the determined network address range.

The indication of the determined network address range may for example comprise the target network address with an appended prefix indication.

The address resolution request may, e.g., be an ARP Request in an IPv4 network. In one variant of the second method, the step of determining the network address range may comprise matching the target network address to network address ranges in a routing table. For example, the address resolution support node may be a router or may be associated with a router, gateway, proxy server or any other kind of routing device maintaining a routing table which defines associations of individual network addresses or network address ranges with particular network interfaces of the routing device. This variant may comprise the step of determining, in case the target network address matches to multiple network address ranges, the smallest matching network address range, i.e. the smallest sub-network addressed, or, in other words, the longest matching prefix is determined.

In either one of the first and second method aspect, a single address format may be used at the host or the address resolution support node, respectively, to represent network addresses and network address ranges. For example, the CIDR notation allows to address individual hosts (i.e., a net mask of 32 bits is applied for an IPv4 network) as well as sub-networks (net mask comprising less than 32 bits in an IPv4 network). The address format may comprise a range indicator indicating either a network address or a network address range. In the above example, the indication of mask length may be used as a range indicator, i.e. the slash portion of the address indication in CIDR-notation.

In one or both of the method aspects, physical addresses may be represented as Media Access Control "MAC" addresses, network addresses may be represented as Internet Protocol "IP" addresses and/or the Address Resolution Protocol "ARP" (e.g., in IPv4 networks) or Neighbour Discovery "ND" (e.g., in IPv6 networks) may be employed for sending and receiving the indication of the network address range.

Further, the abovementioned demand is satisfied with a computer program product, which comprises program code portions for performing the steps of any one of the methods and method aspects described herein when the computer program product is executed on one or more computing devices, for example a terminal device, a server or router. The computer program product may be stored on a computer readable recording medium, such as a permanent or re-writeable memory within or associated with a computing device or a removable CD-ROM, DVD or USB-stick. Additionally or alternatively, the computer program product may be provided for download to a computing device, for example via a data network such as the Internet or a communication line such as a telephone line or wireless link.

The abovementioned demand is moreover satisfied by a host adapted for address resolution in a data transmission network. The host comprises a first component adapted to maintain an association of at least one physical address with at least one network address range comprising multiple network addresses; a second component adapted to obtain a target network address; a third component adapted to compare the target network address with the network address range to determine an associated target physical address; and a fourth component adapted to provide the determined target physical address.

The host may, for example, be a server providing services to other hosts, nodes or devices in the data transmission network. In one variant, the host comprises a further component adapted to determine the network address range associated with the physical address in the host. In another variant, which may be combined with the prior variant, the host comprises a further component adapted to receive an indication of the network address range associated with the physical address at the host.

Still further, the abovementioned demand is satisfied by a storage component for use in a host adapted for address resolution in a data transmission network, the storage component adapted to maintain an association of at least one physical address with at least one network address range comprising multiple network addresses.

The abovementioned demand is further satisfied by an address resolution support node adapted to support address resolution in a data transmission network. The node comprises a first component adapted to receive an address resolution request comprising a target network address; a second component adapted to determine, based on the target network address, a network address range; and a third component adapted to respond with an indication of a physical address of the address resolution support node and an indication of the determined network address range. The address resolution support node may be a routing node in the data transmission network.

The abovementioned demand is furthermore satisfied by a data transmission network comprising a host with the features as summarized above and an address resolution support node with the features as summarized above.

The abovementioned demand is also satisfied by a signal related to address resolution in a data transmission network, the signal representing an indication of a physical address of an address resolution support node and an indication of a network address range. For example, the signal may represent an ARP Reply message modified in order to include a prefix indication.

### Brief Description of the Drawings

In the following, the invention will further be described with reference to exemplary embodiments illustrated in the drawings, in which:
- Fig. 1: schematically illustrates a first embodiment of a data transmission network;
- Fig. 2: illustrates functional components of an embodiment of a host in the data transmission network of Fig. 1;
- Fig. 3: schematically illustrates data in an ARP cache related to the host of Fig. 2;
- Fig. 4: illustrates functional components of an embodiment of an address resolution support node in the data transmission network of Fig. 1;
- Fig. 5: illustrates steps of a first embodiment of a method for address resolution in a data transmission network performed in a host;
- Fig. 6: illustrates steps of a second embodiment of a method for address resolution in a data transmission network performed in an address resolution support node;
- Fig. 7: schematically illustrates an address resolution request / response message pair;
- Fig. 8: illustrates a format of a first embodiment of an address resolution message;
- Fig. 9: illustrates a format of a second embodiment of an address resolution message;
- Fig. 10: schematically illustrates a second embodiment of a data transmission network;
- Fig. 11: schematically illustrates a second embodiment of a data transmission network; and
- Fig. 12: schematically illustrates a third embodiment of a data transmission network.

### Detailed Description of Preferred Embodiments

In the following description, for purposes of explanation and not limitation, specific details are set forth, such as specific network systems including particular network hosts, communication protocols etc., in order to provide a thorough understanding of the described techniques. It will be apparent to one skilled in the art that these techniques may be practiced in other embodiments that depart from these specific details. For example, the skilled artisan will appreciate that they may be practised with data transmission networks different from the Ethernet/IP networks discussed below to illustrate the present invention. The described techniques may be practiced with any data transmission network configured in a layered fashion, wherein hosts, nodes or devices (these terms are used more or less interchangeable herein) have associated physical addresses for physical connections between them and network addresses for end-to-end or at least next-hop network connections. Typically, these networks will be packet-based data transmission networks employing routing mechanisms for the network connections. However, the described techniques may in principle be used for any scenario in which data are transmitted by finding an optimal path through the network using an algorithm such as a routing or switching algorithm.

Those skilled in the art will further appreciate that functions explained herein below may be implemented using individual hardware circuitry, using software functioning in conjunction with a programmed microprocessor or a general purpose computer, using an application specific integrated circuit (ASIC) and/or using one or more digital signal processors (DSPs). It will also be appreciated that when the current invention is described as a method, it may also be embodied in a computer processor and a memory coupled to a processor, wherein the memory is encoded with one or more programs that perform the methods disclosed herein when executed by the processor.

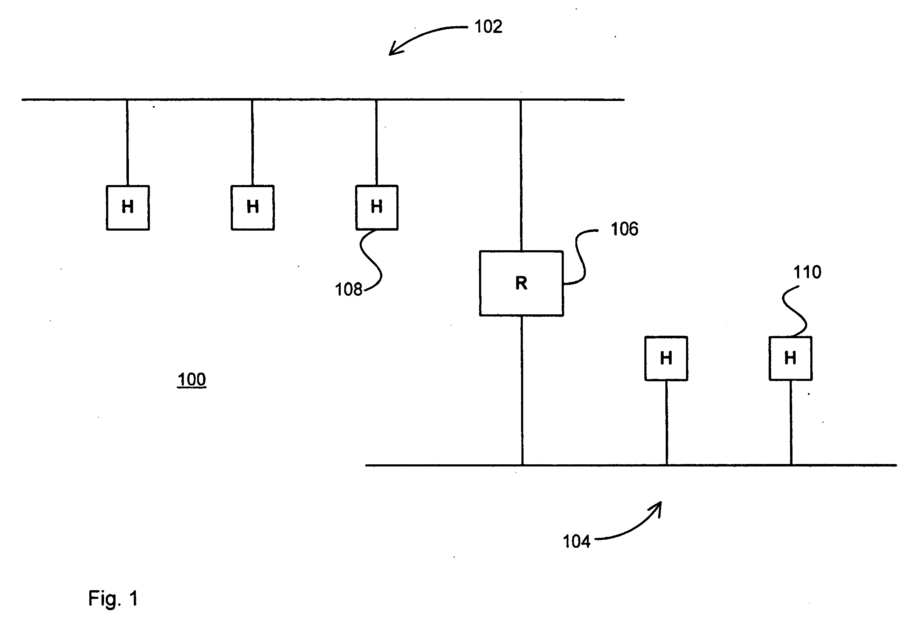

Fig. 1 schematically illustrates, as an embodiment of a data transmission network, an IPv4 (Internet Protocol version 4) network 100 with two physical networks (Local Area Networks, LANs) 102 and 104. Each of the physical networks 102 and 104 comprises a number of hosts, which are designated "H" in Fig. 1. The physical networks 102 and 104 are interconnected with each other via a router "R" 106. A proxy ARP functionality is implemented on router 106 in order that the separate physical networks 102 and 104 appear as a single logical sub-network and may share a single network address (range). The hosts in one or both of the networks 102 and 104 may be configured to assume that a destination host is located in the local physical network although it is actually located at the remote physical network behind proxy ARP router 106.

As a concrete example, host 108 in physical network 102 may want to send data in an IP packet to host 110 in the remote physical network 104. Host 108 does not find an address binding for the network address of host 110 in its ARP cache. Therefore, host 108 broadcasts an ARP Request in physical network 102. Router 106 answers the request based on its proxy ARP functionality. The ARP response contains the physical address (i.e. the hardware address or device address) of the network adapter of router 106 connected to network 102. Assuming that Ethernet is deployed as Layer 2 in network 100, the physical address of router 106 is a MAC (Media Access Protocol) address. The host 108 will send its IP packet towards the router 106 using the MAC address received in the ARP response. Router 106 will forward the packet via network 104 towards the destination host 110.

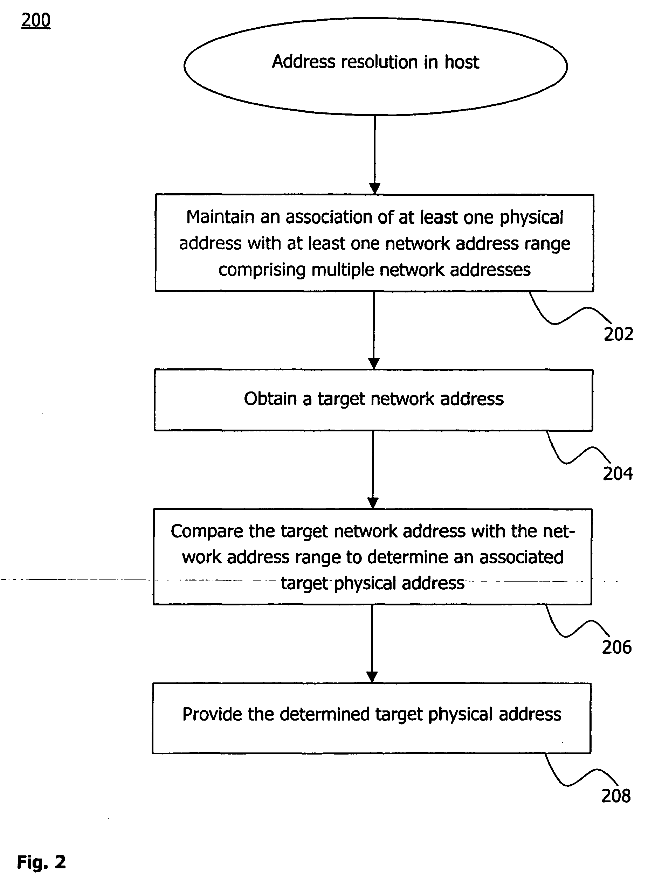

Fig. 2 illustrates steps of an embodiment of a method 200 for address resolution in a data transmission network. The method may be performed in a host of a data transmission network, for example host 108 of Fig. 1.

In step 202, an association of at least one physical address with at least one network address range comprising multiple network addresses is maintained. Referring, as an example, to the scenario of Fig. 1, the network address range may include the network address of host 110. The network address range may, e.g., indicate a common network address of physical networks 102 and 104. In step 204, a target network address is obtained. For example, the target network address may be received from a higher communication layer in the host or from an application layer of an application running on the host.

In step 206, the target network address is compared with the network address range to determine an associated target physical address. Taking the example referring to Fig. 1 further, host 108 may access its ARP cache to determine whether the network address of host 110 matches with an entry in the cache. In step 208, the determined target physical address is provided to other components in the host; for example, a data transmission may be initiated based on the determined target physical address. For instance, as the network address of host 110 falls within the network address range in the cache, host 108 may initiate sending an IP packet to the physical address of router 106, as it may be this address which is associated with the network address range in the cache.

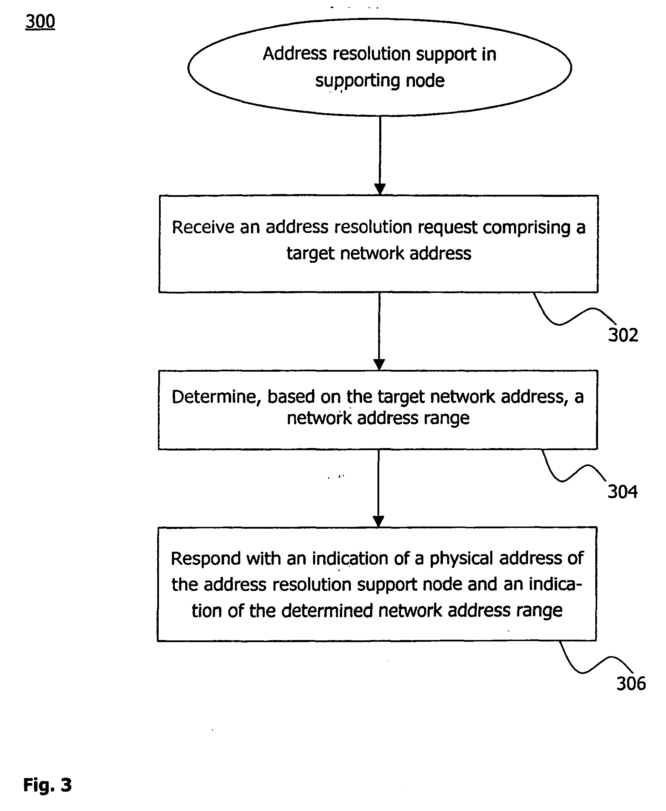

Fig. 3 illustrates steps of an embodiment of a further method 300 for address resolution in a data transmission network, which may for example be performed in an address resolution support node such as the proxy ARP router 106 in Fig. 1.

In step 302, an address resolution request comprising a target network address is received. For example, an ARP Request including the network address of host 110 may be received at router 106 in Fig. 1. In step 304, a network address range is determined based on the received target network address. For example, router 106 may determine a network address shared by both networks 102 and 104 as the network address range. In step 306, a response is provided, which comprises an indication of a physical address of the address resolution support node and an indication of the determined network address range. In the above example, the proxy ARP router 106 may provide an ARP response to host 108 indicating an appropriate MAC address of router 106 and the network address range corresponding to both networks 102 and 104.

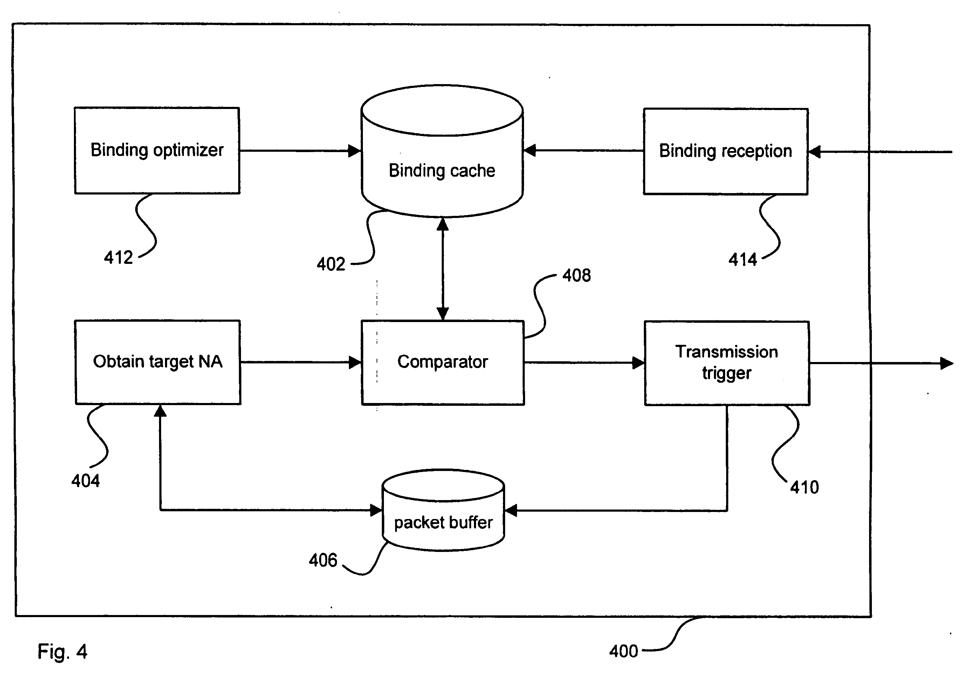

Fig. 4 schematically illustrates functional building blocks of an embodiment of a host 400 adapted for address resolution in a data transmission network. The host 400 may be an implementation of any of the hosts H of Fig. 1, for example, host 108.

The host 400 comprises a storage component 402, which is adapted to maintain an association of at least one physical address with at least one network address range comprising multiple network addresses. An association of a physical address with a network address or network address range may generally be termed a 'binding' herein. As the content of storage component 402 may dynamically change due to changing conditions in the network and/or at the destinations, the component 402 is also named 'binding cache'. A concrete example of binding cache 402 may be an ARP cache in an IPv4 enabled host.

The host 400 further comprises a component 404 which is adapted to obtain a target network address. In the configuration shown in Fig. 4, the component 404 polls a packet buffer 406 which buffers data packets intended for transmission by host 400. For example, an IP layer of the host 400 may have provided an IP packet in the buffer 406. When determining on polling that a packet is available in buffer 406, the component 404 operates to access the stored packet and to extract the IP address as the target network address thereof.

The component 404 delivers the obtained target network address to a comparator 408, which is adapted to compare the obtained target network address with network addresses and network address ranges stored in the binding cache 402. In case, for example, the target network address falls within at least one of the network addresses and network address ranges stored in cache 402, the comparator 408 extracts from cache 402 the physical address associated with the (best) matching network address or address range and provides the extracted physical address to a transmission triggering component 410.

The transmission triggering component 410 is adapted to initiate a data transmission by providing the determined target physical address to an appropriate transmission component (not shown) of host 400, but may also be adapted to provide the address to any other component. The component 410 frames the IP packet in buffer 406, which comprises to add to the IP packet a MAC header including the determined target physical address. Thereafter, the component 410 may trigger a network adapter (not shown) of host 400 to transmit the frame including the IP packet.

The host 400 further comprises a binding optimizer component 412, which is adapted to determine a network address range covering multiple network addresses associated with one and the same physical address. The component 412 accesses the binding cache 402 in regular time intervals and/or following a trigger signal. When accessing the cache, the binding optimizer 412 detects binding entries sharing the same physical address. In case multiple bindings to the same physical address are identified, the multiple binding entries are replaced by a single entry, wherein a network address range is associated with the physical address. In other words, multiple addresses (or address ranges) have been merged into one network address range (or several network address ranges). Examples for merging binding entry mechanisms, which may be performed by the optimizer 412 will be described further below.

In addition to component 412, the host 400 further comprises a binding reception component 414, which is adapted to receive an indication of a network address range associated with a physical address from a network (not shown) to which the host 400 is connected. For example, such binding indications may be received from an address resolution support node such as a router, default gateway, etc. The component 414 adds a received binding indication to the binding entries in cache 402. The component 414 may further operate on the cache 402 to remove those binding entries which have become superfluous due to the newly added entry. Such superfluous entries can be determined, e.g., based on that they indicate the same physical address as the new entry. Alternatively, this cache optimization may be performed by the optimizer 412.

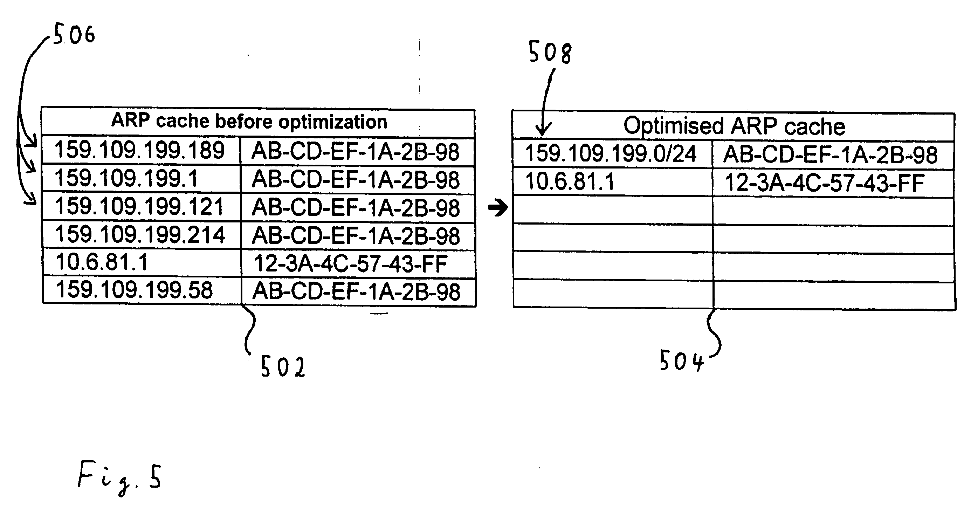

Fig. 5 shows binding entries in an ARP cache, which for purposes of illustration will be assumed to be an exemplary implementation of the binding cache 402. Two states of the cache are shown, namely before 502 and after 504 the cache has been optimized by a binding optimizer such as optimizer 412 in Fig. 4.

The ARP cache 502 includes multiple binding entries 506, wherein each entry comprises an association of a specific IPv4 address (left column) with a MAC address (right column). The cache 502 comprises multiple entries with different IP addresses associated with one and the same MAC address. For example, the cache 502 may belong to a host such as host 108 in Fig. 1, which communicates with a plurality of hosts assumed to be in the same physical network, although in fact the physical network is subdivided by a router such as router 106 in Fig. 1. In case the router has proxy ARP functionality switched on, the router will provide its own MAC address for those hosts actually located in the remote physical network(s) to the requesting host.

The result of optimization is shown by cache 504. The optimizer has identified multiple binding entries with a single MAC address and has merged these multiple entries into a single entry 508 in cache 504. Thereby the multiple individual IP addresses have been replaced by a prefix indication "/24" (CIDR notation) indicating a corresponding network range. In effect, the 256 IP addresses 159.109.199.0 ... 159.109.199.255 are bound to the MAC address of the proxy ARP node, AB-CD-EF-1A-2B-98. As the other entries in tables 502 and 504 denote individual addresses, the prefix indication "/32" has been omitted in the tables.

The host accessing cache 504 in order to determine a target physical address for a target network address has not only to determine whether or not there is an IP address exactly matching with the target IP address, but has to determine whether or not the target IP address falls within address range entries such as binding entry 508. A range entry such as entry 508 covers, besides the specific entries which were contained in the cache 502 before optimization, a lot of further network addresses within the same logical sub-net. This may help to avoid many ARP Requests in the physical network to which the host belongs.

Enabling a binding cache for storing range entries such as entry 508 requires, for example when using the CIDR notation, the provision of extra storage place for the indication of the number of prefix or netmask bits (decimal '24' for the entry 508 in Fig. 5), i.e. at least 7 bits per binding entry for IPv4 network addresses. In this example, the indication '32' refers to individual IP addresses. However, as the number of binding entries in the cache may decrease considerably, as illustrated in Fig. 5, the entire storage place required may decrease also, in particular in case of proxy ARP configurations such as illustrated in Fig. 1 and in similar network scenarios.

An optimization process such as illustrated in Fig. 5 may be performed, for example, in a regular fashion (i.e. periodically), after each received ARP Reply, or whenever the binding cache is added a new entry or a predefined number of new entries.

While the optimization process will generally require identifying multiple entries in a cache pointing towards one and the same physical address, a technique has to be provided which allows determining the network address range which replaces the multiple individual network addresses. One approach may comprise to merge the multiple individual network addresses by applying the smallest possible netmask covering the multiple individual addresses.

As a further condition, a predetermined parameter may be provided which indicates a smallest sub-network or, in other words, a maximum number N of netmask bits (prefix bits, subnet bits) when assuming that the address range is indicated in CIDR notation. For example, in case the parameter N indicates a number of 24 bits (see entry 508), this means that multiple individual IP addresses are merged into a subnet not smaller than a /24 subnet, i.e. netmask 255.255.255.0. The optimizer may further be configured to apply a mask shorter than the parameter N only if all network addresses within the indicated network address range are covered by more specific entries in the cache before optimization.

The parameter N may be configurable, e.g. by an administrator, or may be received from a router such as the default gateway or a proxy ARP router connected to the physical network of the host. The parameter N may be set according to the smallest subnet indicated in the routing table in the proxy ARP router connected to the physical network to which the host belongs. In this case, N indicates that no routes exist in the router for smaller subnets (i.e. longer prefixes). In this way, the mapping of a logical sub-network to multiple physical networks is achieved by referring to the routing table in the router.

N may be set to a smaller value as indicated in the routing table in order to ignore few exceptions within the given network address range. In this case, during optimization of the binding cache in the host, binding entries falling within the determined network address range and related to the exceptions will not be replaced because the corresponding network addresses will be bound to different physical addresses. Thus, these binding entries will remain in the cache. Applying the longest prefix match principle when accessing the cache for address resolution may ensure that data packets intended for transmission to these specific individual destination network addresses will be sent to the correct physical address.

In case a timeout mechanism is applied to the binding cache, a timeout value for a network address range entry inserted by an optimization process may be set to the latest timeout value from the replaced individual entries. In this case, future lookups for address bindings within the indicated subnet may then be successful for the longest possible time span.

With the entries in a binding cache being subject to timeout, specific binding entries which fall with their network address into a network address range also represented in the cache will expire and will then be removed from the cache. In that case, longest prefix match will no longer apply, but traffic will be sent in the first step to the node whose physical address is associated with the network address range, e.g. a router running a proxy ARP functionality. However, the router will forward the traffic correctly to the intended destination. In order to avoid that traffic is unnecessarily directed over the router within the physical network, the host may be configured to observe whether address resolution requests in the physical network contain network addresses falling within network address ranges contained in its binding cache. For example, in an ARP environment, the host may listen to each ARP query comprising as the source hardware address the MAC address of the proxy ARP router. In case such a query is received, the host can conclude that the router's MAC address is not correct for the ARP target IP address indicated in the query. The host may then either broadcast itself an ARP Request or may listen to the reply sent in response to the router's ARP Request and may then insert the resultant binding entry into its ARP cache. In this case, subsequent packets will flow directly between the two hosts in the physical network.

In this way, an optimization algorithm may be operating to optimize a binding cache in a host by merging multiple-binding-entries with the same physical address to a single entry comprising a suitably chosen network address range. Prefix aggregation may thus be handled locally at a host's binding cache only, i.e. communication protocols supporting address resolution such as ARP in IPv4 networks or ND in IPv6 networks need not to be involved. Nevertheless, cache optimization may additionally or alternatively be supported by an appropriate communication of the host with an address resolution support node such as a proxy ARP router in the physical network. This will be described further below.

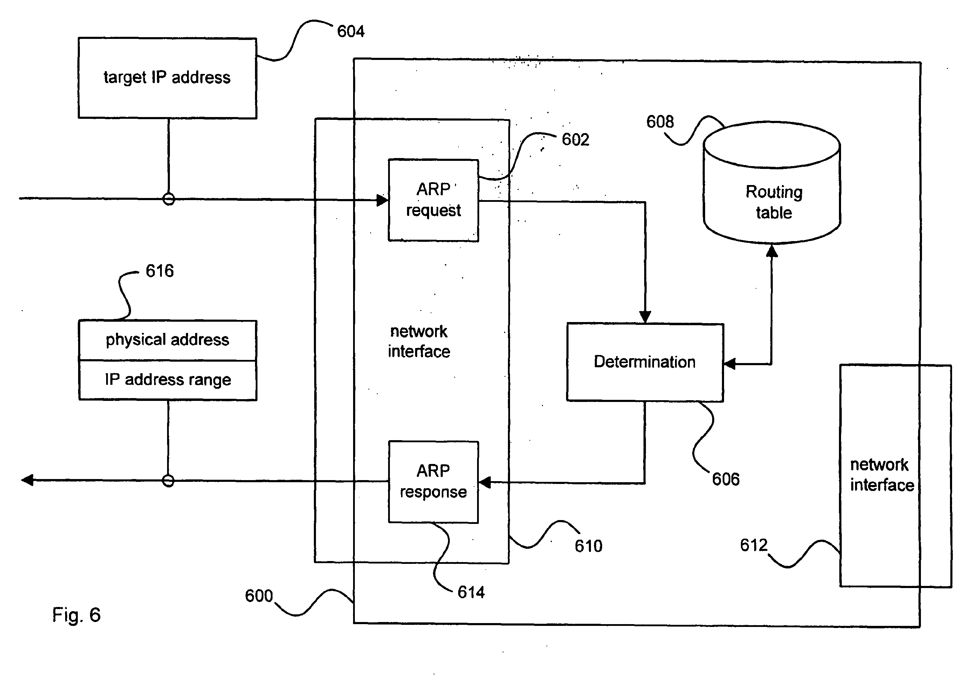

Fig. 6 schematically illustrates functional building blocks of an embodiment of an address resolution support node 600 adapted to support address resolution in a data transmission network. In the following it will be assumed for purposes of explanation and illustration that the node 600 is an implementation of router 106 of Fig. 1.

The node 600 comprises a reception component 602, which is adapted to receive an address resolution request indicating a target network address. In the example illustrated here, the component 602 is adapted to receive an ARP Request 604 from an IPv4 network (not shown) to which router 600 is connected. The ARP Request 604 indicates a target IP address. The component 602 extracts the address from request 604 and provides it to a determination component 606, which is an implementation of a general component adapted to determine a network address or network address range based on the target network address. In the case discussed here, the component 606 implements a modified proxy ARP functionality.

In detail, the component 606 is configured to access, triggered by the target IP address provided from the component 602, a routing table 608 in order to match the target IP address to IP addresses and IP address ranges therein. We will concentrate on the case that the target IP address falls within a particular IP address range of a routing entry in table 608. In case it is determined that the matching IP address range is associated by the routing entry with the network interface which has received the incoming request 604 (i.e. network interface 610 in Fig. 6), the requesting host and the host of the target IP address are within the same physical network; then the determination component 606 may finish processing without taking further action.

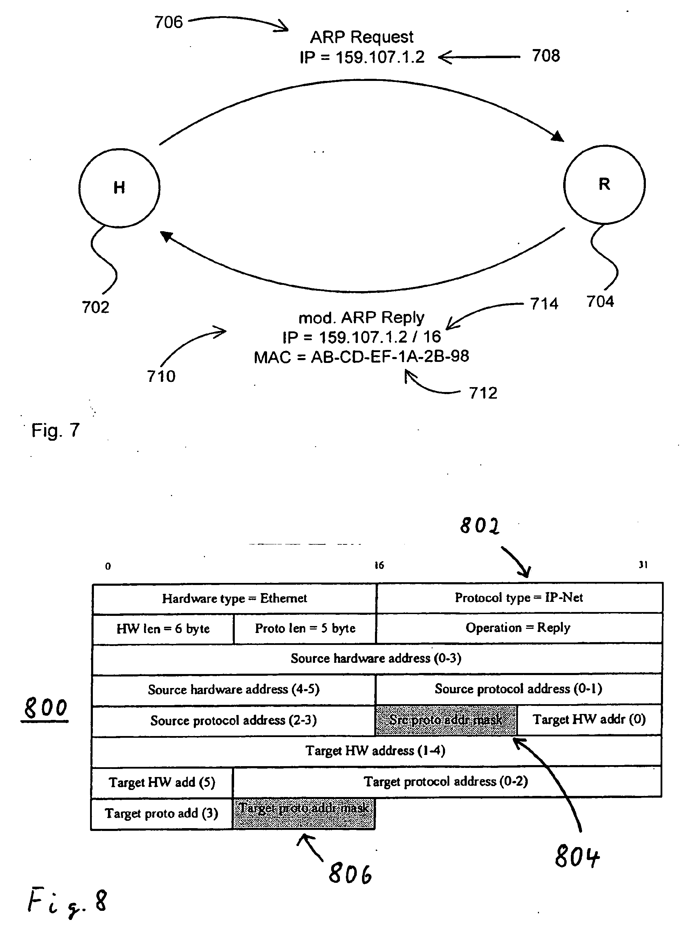

In case it turns out that the matching IP address range is associated in the routing table 608 with a different network interface than the interface of the incoming ARP Request 604, such as interface 612, the component 606 determines the physical address associated with the IP interface 610 connected to the requesting host. Then the component 606 takes the matching IP address range from the routing table 608 and the determined physical address of the network interface 610 and provides these data to a response component 614. This component is generally adapted to respond to an address resolution request such as request 604 with an indication of a physical address of the address resolution support node and an indication of the determined network address range. In the example described here, the component 614 sends a modified ARP response 616 to the originator of the ARP Request 604, the response 616 comprising the physical address of i/f 610 and the matching IP address range from table 608. In different embodiments, the node 600 may additionally be adapted to provide a broadcast message comprising the physical address of i/f 610 and the matching IP address range to the local network connected to the interface 610 without being triggered by an address resolution request such as ARP request 604. For example, the node 600 may be configured to provide such a broadcast message on a periodical basis as long as proxy ARP functionality is activated. Fig. 7 illustrates an address resolution request / reply message pair with the specific example of an ARP Request / Reply communication 700 between a host 702 and a router 704 in an IPv4 network. Host 702 and router 704 may for example be implementations of host 108 and router 106 of Fig. 1.

The host 702 sends an ARP Request 706 towards router 704. The ARP Request 704 indicates as a target network address 708 the IP address 159.107.1.2. The router 706 may operate as exemplarily illustrated in Fig. 6 and provides a modified ARP Reply 710 to host 702. The reply 710 comprises the target IP address 708 as well as a MAC address 712 of the proxy ARP router 704. The router 704 further provides a prefix indication 714, i.e. an indication of a netmask related to the IP address 708. The router 706 may have extracted the prefix indication 714 from a routing entry to which the target address 708 matches in its routing table. Based on the prefix indication 714, the host 702 may conclude that the MAC address 712 of router 704 is not only valid for the individual target IP address 708 but for the network address range 159.107.0.0/16.

Providing the unmodified target IP address with an attached prefix indication back to the requesting host, as illustrated in Fig. 7, advantageously allows the host 702 to ignore the net mask indication 710 and to only use the IP address 708 as in conventional ARP handling in case the host's ARP cache is not adapted to handling netmasks. A possible disadvantage of the scenario illustrated in Fig. 7 is that host 702 may not simply insert the combination of IP address 708, prefix indication 714 and MAC address 712 as a binding entry into its cache, but may has to convert the IP address range from "159.107.1.2/16" to "159.107.0.0/16" before insertion. In an alternative embodiment, the router may provide in its reply the subnetted address, i.e. (referring to the example of Fig. 7) "159.107.0.0/16", instead of simply reflecting the target IP address.

In case the host 702 is enabled for prefix handling with regard to its ARP cache, a binding entry including an IP address range as indicated by the ARP Reply 710 may be inserted into the cache and a cache optimization such as that illustrated above with regard to Fig. 5 may be performed. However, while in the example of Fig. 5 only individual IP addresses have been detected and considered for replacement, the optimization in host 702 involves the received IP address 708 including already the prefix indication 714. Nevertheless, for optimization analogous rules may be applied as discussed above with Fig. 5. Besides deleting any binding entry, whose IP address (range) falls within the address range indicated by address 708 and prefix 714, also an extension of the address range may be considered, e.g. in case any IP address in the enlarged range is explicitly bound to the same MAC address of the router.

As long as the corresponding binding entry does not expire, host 702 may not have to send further ARP Requests for any IP address falling within the indicated address range 159.107.0.0/16.

Fig. 8 illustrates an embodiment of a possible modified ARP message format 800 which may be used, e.g., for the ARP Request 706 / Reply 710 message pair indicated in Fig. 7. The modified ARP Reply may contain a new protocol type 802 exemplarily named "IP-Net" in Fig. 8, which indicates that source protocol address and target protocol address contain extra fields 804 and 806. The term "target address" according to the usual ARP terminology is not to be confused with the term "target network address" as used herein.

Associated with the source protocol address, the field 804 is provided for an indication of a source protocol address mask. Correspondingly, the field 806 is provided for an indication of a target protocol address mask in association with the target protocol address.

A corresponding field 806 is provided containing the address mask of the target protocol address, i.e. the host from where the corresponding ARP request originated. Both fields 804 and 806 could, for example, have a length of 1 byte. The target protocol address mask 806 may be set to 32 in an ARP reply. Referring to the example in Fig. 7, wherein a prefix indication of /16 is provided in the ARP Reply 710, the source protocol address mask 804 may be set to 16.

In the example of Fig. 8 it is assumed that a common format for ARP Request and ARP Reply messages is used. In another embodiment the format proposed in Fig. 8 may only be used for modified ARP Reply messages, while an unmodified format, i.e. without netmask indications, may be used for ARP Requests.

If backwards compatibility is an issue in a particular network, the proxy ARP router could send two ARP Reply messages, i.e. an unmodified ARP Reply, which indicates as the protocol type "IP", and a modified ARP Reply according to, e.g., the format 800 in Fig. 8 including the additional address mask fields 804 and 806.

Instead of modifying the existing ARP protocol, a new protocol could also be deployed to provide prefix based binding entries for the binding cache in hosts. Also a combination of both approaches can be considered. For example, in order to circumvent compatibility problems, a proxy ARP router may send a ARP reply message without netmask indication(s) followed by a message according to a new protocol which conveys a prefix indication (netmask indication) to be applied to the individual source network address in the preceding ARP Request / Reply message pair. Hosts not adapted for receiving or handling prefix indications may simply ignore the new protocol message.

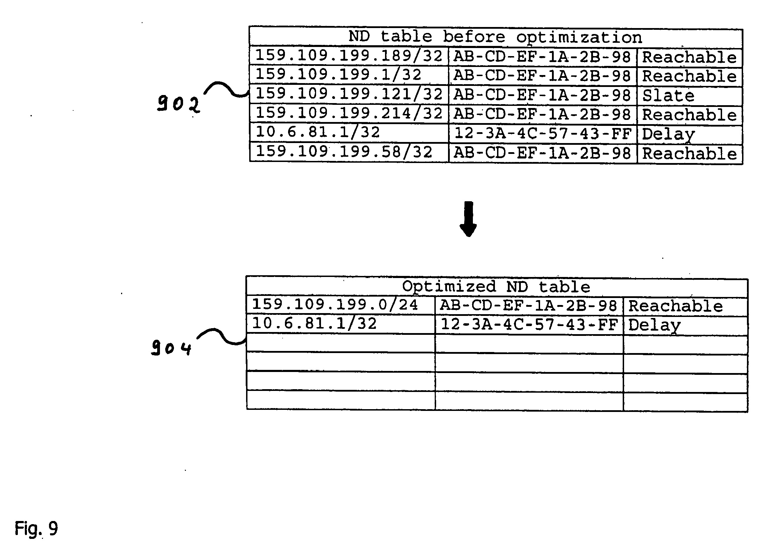

Fig. 9 shows an IPv6 ND table before 902 and after 904 table optimization. A table optimization process in IPv6 environments may in many respects perform in a similar way as has been discussed for cache optimization processes in an IPv4 environment with reference to Fig. 5 above. For example, an IPv6 ND table comprises columns for IP addresses and physical addresses similar to an IPv4 cache, as illustrated in Fig. 9. Address resolution in IPv6 makes use of the message types "Neighbour Solicitation" and "Neighbor Advertisement"; these messages roughly correspond to the ARP Request and ARP Reply IPv4 messages, respectively.

The ND tables in Fig. 9 may comprise netmask or prefix indications so that they can handle prefixes (the prefix indication "/64" for entries including an individual IPv6 address has been omitted in the tables 902 and 904). The result of a table optimization procedure, which operates in a similar way as discussed with reference to optimizing IPv4 caches, is illustrated by the optimized ND table 904.

In IPv6, the neighbour discovery (ND) process is based on a finite state machine. Therefore, each binding entry additionally has associated therewith one state from the possible states 'Incomplete', 'Reachable', 'Slate', 'Delay' and 'Probe'. This has to be considered for table optimization. A table optimization may be performed when receiving Neighbour Advertisements, periodically, or whenever an ND table receives a new entry with other than an incomplete state. Further, a state for a binding entry replacing multiple prior binding entries has to be determined in an appropriate way. As one approach, the new binding entry may receive the status value of the most recent entry among the replaced entries. Another possibility is to rank state values except the state 'Incomplete' in the order: Reachable ⇒ Slate ⇒ Delays ⇒ Probe. Then, if any of the entries to be merged had the state 'Reachable', the new entry will be set to 'Reachable', too. If no entry had the state 'Reachable', but there is at least one entry with 'Slate', the Prefix entry will acquire 'Slate' as a state, etc. Applying this approach to the example table 902 in Fig. 9, as for the binding entry for the IPv6 address range 159.109.199.0/24 several of the merged binding entries had the state 'Reachable', this state is assigned also to the replacing entry in table 904.

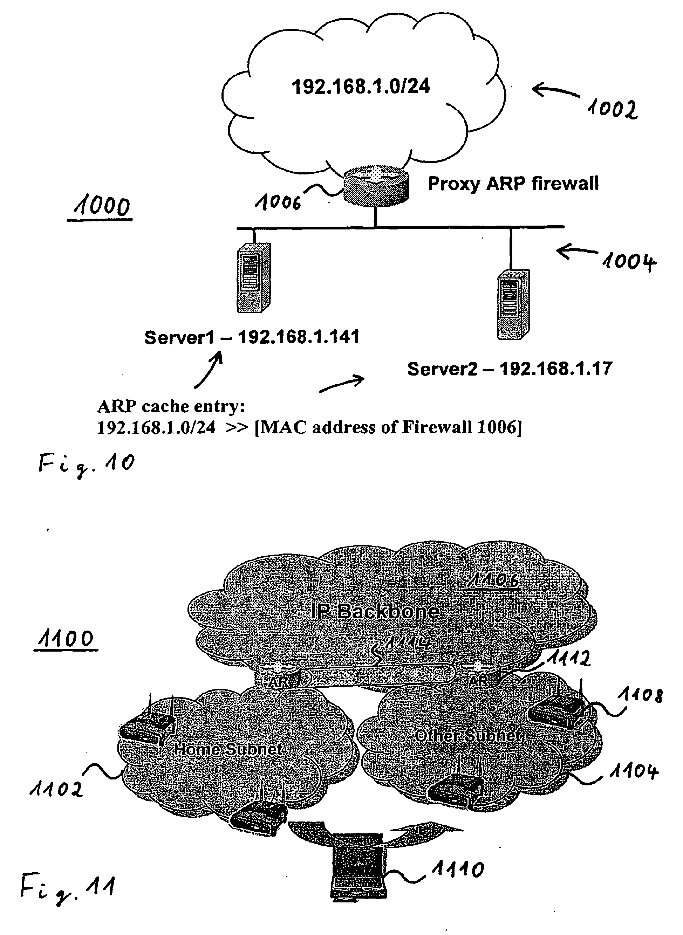

Fig. 10 schematically illustrates an IPv4 network 1000 as an embodiment of a data transmission network. The logical sub-network 192.168.1.0/24 comprises two physical networks 1002 and 1004, which may be two different LANs. Two servers are located in the physical network 1004: Server1 has the IP address 192.168.1.1 assigned and Server2 has the IP address 192.168.1.17 assigned. A firewall 1006 separates Server1 and Server 2 from the physical network 1002. In the firewall 1006, a proxy ARP functionality is switched on.

The ARP caches of both the servers Server1 and Server2 may contain a single masked entry binding the IP address range 192.168.1.0/24 to the MAC address of firewall 1006. Based on this entry, the server may send data for any destination host in the physical network 1002 to the firewall 1004 without the necessity to broadcast an ARP request beforehand, while at the same time the server's ARP cache may be considerably reduced compared to a cache comprising individual binding entries for each of the hosts in network 1002.

The hosts in subnet 1002 might have individual binding entries for any of the servers in the remote physical network 1004; as the entry binding 192.168.1.0/24 to the MAC address of proxy ARP node 1006 would lead to the situation that much of the internal traffic in subnet 1002 may be forwarded via firewall 1006, unless individual entries exist and are preferred due to longest prefix match. In order to prevent unwanted cache optimization in the hosts, any host internal cache optimization such as the mechanisms discussed above with reference to Figs. 4 and 5 might be deactivated. In addition, the firewall 1006 can be configured to provide address range indications only to the server farm in subnet 1004 and to provide conventional ARP replies without address range indications into network 1002. For example, the proxy ARP node 1006 may provide prefix indications /32 only to LAN 1002 and prefix indications /24 only to LAN 1004.

The routing table of router 1006 will contain entries including the individual server addresses of Server1 and Server2 as host addresses, i.e. with 32 bit netmasks. The routing entry for the LAN 1002, on the other hand, will associate the hardware address of the interface towards the LAN 1002 with the 192.168.1.0/24 subnet address. A modified proxy ARP mechanism such as that described with reference to Fig. 6 will thus lead to the behaviour described in the preceding paragraph.

In case Server1 wants to communicate with Server2, it would need a more specific entry in its ARP cache binding the address 192.168.1.17 to the MAC address of Server2. Applying the longest prefix match principle then allows direct communication. The required specific entry may be generated, e.g., by listening to the ARP Requests of router 1004.

Fig. 11 illustrates as a further embodiment of a data transmission network an IP network 1100 comprising separate physical networks 1102 and 1104, which are interconnected by a backbone network 1106. Each of the sub-nets 1102 and 1104 comprise a number of wireless access points 1108. Network 1100 implements IP-based mobility concepts to enable a mobile device 1110 accessing the network.

The mobile device 1110 is assumed to have a stationary IP address from an address range belonging to its home network 1102. Sub-network 1104 will have a different IP address prefix. For the case the device 1110 wants to connect to network 1100 via - access network 1104, an access router (AR) 1112 provides proxy ARP functionality. In particular, the router 1112 answers ARP requests of device 1110 as a proxy ARP. In this way, device 1110 assumes to be in its home subnet 1102. Access router 1112 forwards packets received from device 1110 via a tunnel 1114 extending through backbone 1106 towards the home subnet 1102 of host 1110.

Mobile host 1110 may typically want to communicate with a multiple servers, hosts or nodes in its home network 1102, e.g. requesting services such as authentication / authorization services, application services, data or multimedia communications with other hosts etc. Host 1110 may have an optimized ARP cache similar to cache 504 of Fig. 5, which comprises a specific binding entry, in which a network address range indicating the subnet address of network 1102 is associated with a MAC address of access router 1112. Any of the techniques described hereinbefore may be deployed, e.g. host 1110 may have a binding optimizer such as optimizer 412 in Fig. 4 and/or access router 1112 may provide IP address range indications, e.g. in the form of prefix indications, for insertion into the ARP cache of host 1110.

The size of the ARP cache of mobile host 1110 may in this way be considerably reduced. Further, the number of ARP requests broadcasted in subnet 1104 from the mobile host 1110 may considerably be reduced. Furthermore, this may reduce a processing burden of access router 1112. In particular, the processing load of access router 1112 may considerably be reduced in case subnet 1104 is visited from many mobile hosts such as host 1110.

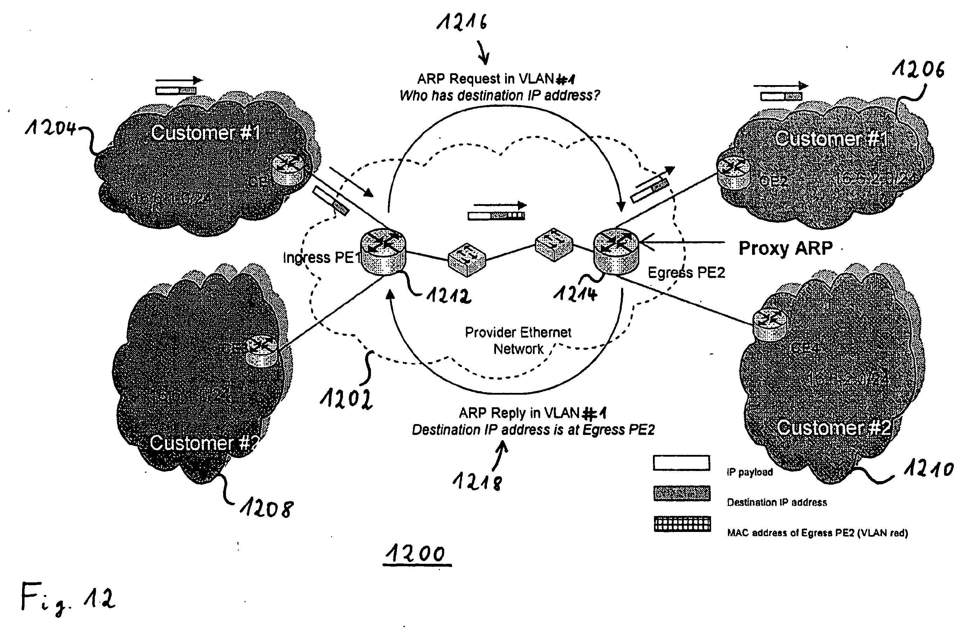

Fig. 12 is a schematic illustration of an embodiment of a data transmission network 1200 implementing a Layer 3 VPN (Virtual Private Network). Provider edge (PE) devices are located in a provider Ethernet network 1202, which contains the VPN functionality required to transfer IP traffic between customer sites 1204 and 1206 of customer #1 and sites 1208 and 1210 of customer #2, i.e. the subnets 1204 and 1206 interconnected by network 1202 form a VPN for customer #1 and the subnets 1208 and 1210 interconnected by network 1202 form a VPN for customer #2. Customer equipment (CE) devices are provided in each of the customer subnetworks 1204 - 1210 in order to connect the sites with the provider network 1202.

Illustrated in Fig. 12 is a typical situation, in which customer #1 and customer #2 use the same, i.e. overlapping private address ranges in their respective VPNs. For instance, networks 1204 and 1208 both have assigned the network address 16.6.1.0/24 in their respective VPNs. Therefore, a mechanism is required in order for the PE routers 1212 and 1214 in network 1202 to choose the appropriate network interface towards the respective corresponding customer subnetwork. Layer 3 mechanisms may be used for this purpose. Additionally or alternatively, an address resolution technique may also be deployed.

In the provider network 1202, two VLANs VLAN #1 and VLAN #2 (not explicitly shown in Fig. 12) may be configured for customer #1 and customer #2, respectively. The address resolution technique will be exemplarily illustrated by following an IP packet 1260 from customer #1 network 1204 to customer #1 network 1206 in Fig. 12. The packet includes a destination IP address falling within the subnetwork address range 16.6.2.0/24. As routers 1212 and 1214 are located in the same physical network 1202, router 1212 may broadcast an ARP request 1216 in VLAN #1 in order to determine the next-hop MAC address based on the destination IP address of packet 1216.

The egress router 1214 has a virtual router for VLAN #1 implemented which includes a proxy ARP functionality. Therefore, router 1214 may answer the ARP request 1216 by providing an ARP reply 1218. The ARP reply in VLAN #1 may comprise an indication of the IP address range 16.6.2.0/24. Alternatively, an unmodified ARP request/reply mechanism may be deployed in VLAN #1 and internal cache optimization mechanism may be provided in the ingress router 1212. Also a combination of both mechanisms can be implemented. In any case, the ARP cache of a virtual router in the ingress router 1212 will have an entry binding the subnetwork 16.6.2.0/24 to a MAC address of the egress router 1214. In this way, the ARP cache size of router 1212 may decrease considerably. The ARP processing burden of router 1214 can be substantially reduced and the network load in physical network 1202 related to VLAN #1 can also be reduced considerably.

The techniques proposed herein may generally lead in network hosts to a decreasing number of associations of network addresses with physical addresses, i.e. a reduced binding cache. Moreover, the techniques may reduce a network load in data transmission networks due to a decreased number of broadcasted address resolution requests. Further, the processing burden for handling such address resolution requests in address resolution support nodes such as routers, default gateways, firewalls, etc. may be reduced.

While the current invention has been described in relation to its preferred embodiments, it is to be understood that this description is for illustrative purposes only. Accordingly, it is intended that the invention be limited only by the scope of the claims appended hereto.

### Further embodiments

E1. A method for address resolution in a data transmission network wherein the predetermined minimum sub-network size represents a smallest sub-network size used for routing in a routing node that can be contacted by the host.
E2. A method for address resolution in a data transmission network comprising the further step of receiving an indication of the network address range associated with the physical address at the host.
E3. A method for address resolution in a data transmission network comprising the further step of determining, in case the target network address matches to multiple network address ranges, the smallest matching network address range in order to determine the target physical address.
E4. A method for address resolution in a data transmission network comprising the further step of sending, in case the target network address does not match to any network address range or individual network address, an address resolution request comprising the target network address.
E5. A computer program product stored on a computer readable recording medium implementing any of the previous methods.
E6. An address resolution support node wherein the address resolution support node is a routing node in the data transmission network.

## Claims

1. A method for address resolution in a data transmission network comprising two physical networks (102, 104) which are interconnected by an address resolution support node (106, 600, 704, 1006, 1112, 1214) having an ARP functionality implemented therein, the method comprising the following steps performed in a host (108, 400, 702, 113.0, 1212) of the data transmission network (100, 1000, 1100, 1200), the host (108, 400, 702, 1110, 1212) comprising an ARP cache (502):
- maintaining (202) in the ARP cache an association of at least one physical MAC address associated with the address resolution support node with at least one IP network address range comprising multiple IP network addresses;
- obtaining (204) a target IP network address;
- comparing (206) the target IP network address with the IP network address range to determine an associated target physical MAC address; and
- providing (208) the determined target physical MAC address.

2. The method according to claim 1,
wherein the network address range indicates a sub-network of the data transmission network.

3. The method according to claim 1 or 2,
comprising the initial step of determining the network address range associated with the physical address in the host.

4. The method according to claim 3,
wherein the host maintains a list (502) of associations (506) of individual network addresses with individual physical addresses, and the step of determining the network address range comprises detecting associations of different network addresses with one and the same physical address.

5. The method according to claim 2 and 3 or 4,
wherein, in the step of determining the network address range, the network address range is set to a range of at least a predetermined minimum sub-network size.

6. A method for address resolution in a data transmission network comprising two physical networks (102, 104), the method comprising the following steps performed in an address resolution support node (106, 600, 704, 1006, 1112, 1214) of the data transmission network (100, 1000, 1100, 1200), the address resolution support node (106, 600, 704,1006,1112,1214) interconnecting the two physical networks (102, 104) and having an ARP functionality implemented therein:
- receiving (302) an ARP address resolution request (604) comprising a target IP network address;
- determining (304), based on the target IP network address, an IP network address range; and
- responding (306) with an ARP response comprising an indication (616) of a physical MAC address of the address resolution support node and an indication of the determined IP network address range.

7. The method according to claim 6,
wherein the step of determining the network address range comprises matching the target network address to network address ranges in a routing table (608).

8. The method according to any one of the preceding claims,
wherein a single address format is used to represent network addresses and network address ranges.

9. The method according to claim 8,
wherein the address format comprises a range indicator (714) indicating either a network address or a network address range.

10. A computer program product comprising program code portions for performing the steps of any one of the preceding claims when the computer program product is executed on one or more computing devices.

11. A host adapted for address resolution in a data transmission network comprising two physical networks (102, 104) which are interconnected by an address resolution support node (106, 600, 704, 1006, 1112, 1214) having an ARP functionality implemented therein, the host (400) comprising:
an ARP cache (402) adapted to maintain an association of at least one physical MAC address associated with the address resolution support node with at least one IP network address range comprising multiple IP network addresses;
- a second component (404) adapted to obtain a target IP network address;
- a third component (408) adapted to compare the target IP network address with the network address range to determine an associated target physical MAC address; and
- a fourth component (410) adapted to provide the determined target physical MAC address.

12. The host according to claim 11,
wherein the host comprises a further component (412) adapted to determine the network address range associated with the physical address.

13. The host according to claim 11 or 12,
wherein the host comprises a further component (414) adapted to receive an indication of the network address range associated with the physical address at the host.

14. An address resolution support node adapted to support address resolution in a data transmission network comprising two physical networks (102, 104), the node (106, 600, 704, 1006, 1112, 1214) interconnecting the two physical networks (102, 104), having an ARP functionality implemented and comprising:
- a first component (602) adapted to receive an ARP address resolution request (604) comprising a target IP network address;
- a second component (606) adapted to determine, based on the target IP network address, a IP network address range; and
- a third component (614) adapted to respond with an ARP response comprising an indication (616) of a physical MAC address of the address resolution support node and an indication of the determined IP network address range.

15. A data transmission network (100, 1000, 1100, 1200) comprising a host according to any one of claims 11 to 13 and an address resolution support node according to claim 14.

## Patentansprüche

1. Verfahren zur Adressauflösung in einem Datenübertragungsnetz, das zwei physikalische Netze (102, 104) umfasst, welche durch einen Adressauflösungs-Unterstützungsknoten (106, 600, 704, 1006, 1112, 1214) mit einer darin implementierten ARP-Funktionalität miteinander verbunden sind, wobei das Verfahren die folgenden Schritte umfasst, die in einem Host (108, 400, 702, 1110, 1212) des Datenübertragungsnetzes (100, 1000, 1100, 1200) ausgeführt werden, wobei der Host (108, 400, 702, 1110, 1212) einen ARP-Cache (502) umfasst:
- Bewahren (202) im ARP-Cache einer Assoziation mindestens einer physikalischen MAC-Adresse, die mit dem Adressauflösungs-Unterstützungsknoten assoziiert ist, wobei mindestens ein IP-Netzadressbereich mehrere IP-Netzadressen umfasst;
- Erhalten (204) einer Ziel-IP-Netzadresse;
- Vergleichen (206) der Ziel-IP-Netzadresse mit dem IP-Netzadressbereich, um eine assoziierte physikalische Ziel-MAC-Adresse zu bestimmen; und
- BereitstelJ.en (208) der bestimmten physikalischen Ziel-MAC-Adresse.

2. Verfahren nach Anspruch 1,
wobei der Netzadressbereich ein Subnetz des Datenübertragungsnetzes anzeigt.

3. Verfahren nach Anspruch 1 oder 2,
umfassend den anfänglichen Schritt des Bestimmens des Netzadressbereichs, der mit der physikalischen Adresse assoziiert ist, im Host.

4. Verfahren nach Anspruch 3,
wobei der Host eine Liste (502) von Assoziationen (506) von einzelnen Netzadressen mit einzelnen physikalischen Adressen führt, und der Schritt des Bestimmens des Netzadressbereichs ein Erkennen von Assoziationen von verschiedenen Netzadressen mit ein und derselben Netzadresse umfasst.

5. Verfahren nach Anspruch 2 und 3 oder 4,
wobei im Schritt des Bestimmens des Netzadressbereichs der Netzadressbereich auf einen Bereich von mindestens einer vorgegebenen Subnetz-Mindestgröße gesetzt wird.

6. Verfahren zur Adressauflösung in einem Datenübertragungsnetz, das zwei physikalische Netze (102, 104) umfasst, wobei das Verfahren die folgenden Schritte umfasst, die in einem Adressauflösungs-Unterstützungsknoten (106, 600, 704, 1006, 1112, 1214) des Datenübertragungsnetzes (100, 1000, 1100, 1200) ausgeführt werden, wobei der Adressauflösungs-Unterstützungsknoten (106, 600, 704, 1006, 1112, 1214) die beiden physikalischen Netze (102, 104) miteinander verbindet und eine ARP-Funktionalität darin implementiert aufweist:
- Empfangen (302) einer ARP-Adressauflösungsanforderung (604), die eine Ziel-IP-Netzadresse umfasst;
- Bestimmen (304) auf der Basis der Ziel-IPNetzadresse eines IP-Netzadressbereichs; und
- Antworten (306) mit einer ARP-Antwort, die eine Anzeige (616) einer physikalischen MAC-Adresse des Adressauflösungs-Unterstützungsknotens und eine Anzeige des bestimmten IP-Netzadressbereichs umfasst.

7. Verfahren nach Anspruch 6,
wobei der Schritt des Bestimmens des Netzadressbereichs ein Vergleichen der Zielnetzadresse mit Netzadressbereichen in einer Leitwegtabelle (608) umfasst.

8. Verfahren nach einem der vorhergehenden Ansprüche,
wobei ein einziges Adressformat verwendet wird, um Netzadressen und Netzadressbereiche darzustellen.

9. Verfahren nach Anspruch 8,
wobei das Adressformat einen Bereichsindikator (714) umfasst, der entweder eine Netzadresse oder einen Netzadressbereich anzeigt.

10. Computerprogrammprodukt, umfassend Programmcodeabschnitte zum Ausführen der Schritte nach einem der vorhergehenden Ansprüche, wenn das Computerprogrammprodukt auf einem oder mehreren Rechengeräten ausgeführt wird.

11. Host, der zur Adressauflösung in einem Datenübertragungsnetz ausgelegt ist, das zwei physikalische Netze (102, 104) umfasst, die durch einen Adressauflösungs-Unterstützungsknoten (106, 600, 704, 1006, 1112, 1214) mit einer darin implementierten ARP-Funktionalität miteinander verbunden sind, wobei der Host (400) umfasst:
- einen ARP-Cache (402), der so ausgelegt ist, dass er eine Assoziation mindestens einer physikalischen MAC-Adresse bewahrt, die mit dem Adressauflösungs-Unterstützungsknoten assoziiert ist, wobei mindestens ein IP-Netzadressbereich mehrere IP-Netzadressen umfasst;
- eine zweite Komponente (404), die so ausgelegt ist, dass sie eine ziel-IP-Netzadresse erhält;
- eine dritte Komponente (408), die so ausgelegt ist, dass sie die Ziel-IP-Netzadresse mit dem IP-Netzadressbereich vergleicht, um eine assoziierte physikalische ziel-MAC-Adresse zu bestimmen; und
- eine vierte Komponente (410), die so ausgelegt ist, dass sie eine physikalische Ziel-MAC-Adresse bereitstellt.

12. Host nach Anspruch 11,
wobei der Host eine weitere Komponente (412) umfasst, die so ausgelegt ist, dass sie den Netzadressbereich bestimmt, der mit der physikalischen Adresse assoziiert ist.

13. Host nach Anspruch 11 oder 12,
wobei der Host eine weitere Komponente (414) umfasst, die so ausgelegt ist, dass sie am Host eine Anzeige des Netzadressbereichs empfängt, der mit der physikalischen Adresse assoziiert ist.

14. Adressauflösungs-Unterstützungsknoten, der so ausgelegt ist, dass er Adressauflösung in einem Datenübertragungsnetz unterstützt, das zwei physikalische Netze (102, 104) umfasst, wobei der Knoten (106, 600, 704, 1006, 1112, 1214) die beiden physikalischen Netze (102, 104) miteinander verbindet und eine A12P-Funktionalität darin implementiert aufweist und umfasst:
- eine erste Komponente (602), die so ausgelegt ist, dass sie eine äRP-Adressauflösungsanforderung (604) empfängt, die eine Ziel-IP-Netzadresse umfasst;
- eine zweite Komponente (606), die so ausgelegt ist, dass sie auf der Basis der Ziel-IP-Netzadresse einen IP-Netzadressbereich bestimmt; und
- eine dritte Komponente (614), die so ausgelegt ist, dass sie mit einer AFP-Antwort antwortet, die eine Anzeige (616) einer physikalischen MAC-Adresse des Adressauflösungs-Unterstützungsknotens und eine Anzeige des bestimmten IP-Netzadressbereichs umfasst.

15. Datenübertragungsnetz (100, 1000, 1100, 1200), umfassend einen Host nach einem der Ansprüche 11 bis 13 und einen Adressaufltisungs-Unterstützungsknoten nach Anspruch 14.

## Revendications

1. Procédé de résolution d'adresse dans un réseau de transmission de données comprenant deux réseaux physiques (102,104) qui sont interconnectés par un noeud de prise en charge de résolution d'adresse (106,600,704,1006,1112,1214) dans lequel est implémentée une fonctionnalité ARP, le procédé comprenant les étapes suivantes effectuées dans un hôte (108,400,702,1110,1212) du réseau de transmission de données (100,1000,1100,1200), l'hôte (108,400,702,1110,1212) comprenant un cache ARP (502) consistant à ;
- conserver (202) dans le cache ARP une association d'au moins une adresse MAC physique associée au noeud de prise en charge de résolution d'adresse avec au moins une plage d'adresses de réseau IP comprenant des adresses de réseau IP multiples ;
- obtenir (204) une adresse de réseau IP cible ;
- comparer (206) l'adresse de réseau IP cible avec la plage d'adresses de réseau IP pour déterminer une adresse MAC physique cible associée ; et
- fournir (208) l'adresse MAC physique cible déterminée.

2. Procédé selon la revendication 1,
dans lequel la plage d'adresses de réseau indique un sous-réseau du réseau de transmission de données.

3. Procédé selon la revendication 1 ou 2,
comprenant l'étape initiale consistant à déterminer la plage d'adresses de réseau associée à l'adresse physique dans l'hôte.

4. Procédé selon la revendication 3,
dans lequel l'hôte conserve une liste (502) d'associations (506) d'adresses de réseau individuelles avec des adresses physiques individuelles, et l'étape de détermination de la plage d'adresses de réseau comprend de détecter des associations d'adresses de réseau différentes avec une seule adresse physique.

5. Procédé selon la revendication 2 et 3 ou 4,
dans lequel, à l'étape de détermination de la plage d'adresses de réseau, la plage d'adresses de réseau est réglée sur une plage d'au moins une taille de sous-réseau minimal prédéterminée.

6. Procédé de résolution d'adresse dans un réseau de transmission de données comprenant deux réseaux physiques (102,104), le procédé comprenant les étapes suivantes effectuées dans un noeud de prise en charge de résolution d'adresse (106,600,704,1006,1112,7.214) du réseau de transmission de données (100,1000,1100,1200), le noeud de prise en charge de résolution d'adresse (106,600,704,1006,1112,1214) interconnectant les deux réseaux physiques (102,104) et ayant une fonctionnalité ARP implémentée dans celui-ci consistant à :
- recevoir (302) une demande de résolution d'adresse ARP (604) comprenant une adresse de réseau IP cible ;
- déterminer (304), sur la base de l'adresse de réseau IP cible, une plage d'adresses de réseau IP ; et
- répondre (306) par une réponse ARP comprenant une indication (616) d'une adresse MAC physique du noeud de prise en charge de résolution d'adresse et une indication de la plage d'adresses de réseau IP déterminé.

7. Procédé selon la revendication 6, dans lequel l'étape de détermination de la plage d'adresses de réseau comprend de faire concorder l'adresse de réseau cible avec des plages d'adresses de réseau dans une table de routage (608).

8. Procédé selon une quelconque des revendications précédentes,
dans lequel un format d'adresse individuel est utilisé pour représenter des adresses de réseau et des plages d'adresses de réseau.

9. Procédé selon la revendication 8, dans lequel le format d'adresse comprend un indicateur de plage (714) indiquant soit une adresse de réseau, soit une plage d'adresses de réseau.

10. Produit de programme informatique comprenant des portions de code de programme pour mettre en oeuvre les étapes d'une quelconque des revendications précédentes quand le produit de programme informatique est exécuté sur un ou plusieurs dispositifs informatiques.

11. Hôte adapté à la résolution d'adresse dans un réseau de transmission de données comprenant deux réseaux physiques (102,104) qui sont interconnectés par un noeud de prise en charge de résolution d'adresse (106,600,704,1006,1112,1214) dans lequel est implémentée une fonctionnalisé ARP, l'hôte (400) comprenant :
- un cache ARP (402) adapté pour conserver une association d'au moins une adresse MAC physique associée au noeud de prise en charge de résolution d'adresse avec au moins une plage d'adresses de réseau IP comprenant des adresses de réseau IP multiples ;
- un second composant (404) adapté pour obtenir une adresse de réseau IP cible ;
- un troisième composant (408) adapté pour comparer l'adresse de réseau IP cible avec la plage d'adresses de réseau pour déterminer une adresse MAC physique cible associée ; et
- un quatrième composant (410) adapté pour fournir l'adresse MAC physique cible déterminée.

12. Hôte selon la revendication 11,
dans lequel l'hôte comprend un composant supplémentaire (412) adapté pour déterminer la plage d'adresses de réseau associée à l'adresse physique.

13. Hôte selon la revendication 11 ou 12,
dans lequel l'hôte comprend un composant supplémentaire (414) adapté pour recevoir une indication de la plage d'adresses de réseau associées à l'adresse physique au niveau de l'hôte.

14. Noeud de prise en charge de résolution d'adresse adapté pour prendre en charge une résolution d'adresse dans un réseau de transmission de données comprenant deux réseaux physiques (102,104), le noeud (106,600,704,1006,1112,1214) interconnectant les deux réseaux physiques (102,104), dans lequel une fonctionnalité ARP est implémentée et comprenant :
- un premier composant (602) adapté pour recevoir une demande de résolution d'adresse ARP (604) comprenant une adresse de réseau IP cible ;
- un second composant (606) adapté pour déterminer, sur la base de l'adresse de réseau IP cible, une plage d'adresses de réseau IP ; et
- un troisième composant (614) adapté pour répondre par une réponse ARP comprenant une indication (616) d'une adresse MAC physique du noeud de prise en charge de résolution d'adresse et une indication de la plage d'adresses de réseau IP déterminé.

15. Réseau de transmission de données (100,1000,1100,1200) comprenant un hôte selon une quelconque des revendications 11 à 13 et un noeud de prise en charge de résolution d'adresse selon la revendication 14.
